# FASCICULE DE BREVET EUROPEEN

(11) **EP 0 713 351 B1**
(45) Date de publication et mention de la délivrance du brevet: **06.10.1999**
(21) Numéro de dépôt: 95402525.0
(22) Date de dépôt: 10.11.1995
(51) Int. Cl.: H05B 6/12, H05B 6/36

(54) **Foyer de cuisson à induction**
Induktions-Kochmulde
Induction cooking surface

(30) Priorité: 15.11.1994 FR 9413653
(43) Date de publication de la demande: 22.05.1996
(73) Titulaire: COMPAGNIE EUROPEENNE POUR L'EQUIPEMENT MENAGER "CEPEM", F-45140 St Jean-de-la-Ruelle (FR)
(72) Inventeur: Gaspard, Jean-Yves, 94117 Arcueil cedex (FR); Burais, Noel, 94117 Arcueil cedex (FR)
(74) Mandataire: Beylot, Jacques

(56) Documents cités:
- EP-A- 0 158 353
- EP-A- 0 565 186
- FR-A- 2 659 725
- US-A- 4 770 355
- PATENT ABSTRACTS OF JAPAN vol. 013 no. 571 (E-862) ,18 Décembre 1989 & JP-A-01 239791 (FUJI ELECTRIC CO LTD) 25 Septembre 1989,

## Description

La présente invention concerne un perfectionnement dans les appareils de cuisson à induction.

Le principe général de la cuisson par induction consiste à placer un récipient adapté à ce type de cuisson au-dessus d'un inducteur alimenté par un courant électrique haute fréquence. Le champ magnétique produit par l'inducteur génère, par induction, une circulation de courants dans les parois et le fond du récipient, lesquels vont s'échauffer et permettre, par conduction thermique, le chauffage et la cuisson d'un aliment placé dans le récipient.

L'inducteur est classiquement constitué par au moins une bobine plane, réalisée en enroulant un toron de fils sur lui-même sous la forme d'une spirale, généralement circulaire et concentrique. L'alimentation en courant dans la bobine s'effectue en connectant les deux extrémités libres du toron, l'une étant au centre de la spirale et l'autre, sur la périphérie, aux bornes d'un générateur délivrant un courant haute fréquence.

La fabrication des inducteurs pose à l'heure actuelle un certain nombre de problèmes :

Tout d'abord, il est très difficile d'obtenir une bobine de diamètre constant car le toron lui-même ne possède pas une section constante sur toute sa longueur. En effet, chaque fil élémentaire formant le toron doit être entouré d'un isolant dont l'épaisseur n'est pas maîtrisée précisément.

Par ailleurs, les torons de fils, généralement en cuivre, utilisés pour les inducteurs connus présentent une section importante, typiquement de l'ordre de 6 mm². Cette forte section agit de façon bénéfique sur la répartition et l'évacuation des pertes du bobinage de l'inducteur dont la température ne doit pas excéder 200°C pour les isolations standard des fils élémentaires. Cependant, cette section importante a une incidence significative sur le coût global d'un inducteur.

La présente invention a pour but principal de proposer un foyer de cuisson à induction dans lequel l'inducteur utilisé présente un diamètre constant, réalisé à partir d'un toron dont la section est considérablement réduite par rapport aux inducteurs connus. Ceci nécessite d'évacuer la chaleur qui devient plus difficile à véhiculer en raison de la section moindre du toron.

On connaît du document US-A-4.467.162 un foyer de cuisson à induction comprenant un inducteur, un support d'inducteur en matériau magnétique, et un plateau de blindage disposé sous le support, en contact avec ce support, l'une des fonctions annexes de ce plateau étant de dissiper les calories de l'inducteur.

On connaît également du document EP-A-0 565 186 un foyer de cuisson à induction comprenant un enroulement inducteur en méplat rigide disposé verticalement dans une rainure en spirale creusée à la surface d'un support. Ce foyer de cuisson n'est adapté qu'aux faibles puissances en raison des problèmes de l'effet de peau et de proximité de la charge qui font que le courant migre à la surface supérieure du méplat. Le volume utile dans lequel passe les courants haute fréquence est fortement localisé dans le haut du conducteur et très réduit ce qui entraîne un échauffement limitant l'application de ce dispositif à des courants et donc des puissances d'excitation faibles. Ce foyer pose aussi le problème du maintien du fil conducteur rigide dans son logement pour lequel il faut prévoir des pattes de fixation difficiles à réaliser dans un matériau qui doit être à la fois isolant électrique et résistant à la chaleur.

La présente invention a pour objet un foyer de cuisson à induction du type de celui décrit dans le document US-A-4.467.162, caractérisé en ce que le support est réalisé en un matériau conducteur thermique et isolant électrique et en ce que, l'inducteur comportant un toron de fils conducteur électrique multibrins enroulé en forme de spirale, le support comporte, sur sa face supérieure, au moins un logement en forme de spirale adapté pour recevoir ledit toron, de manière à optimiser le transfert de chaleur entre l'inducteur et le plateau de blindage.

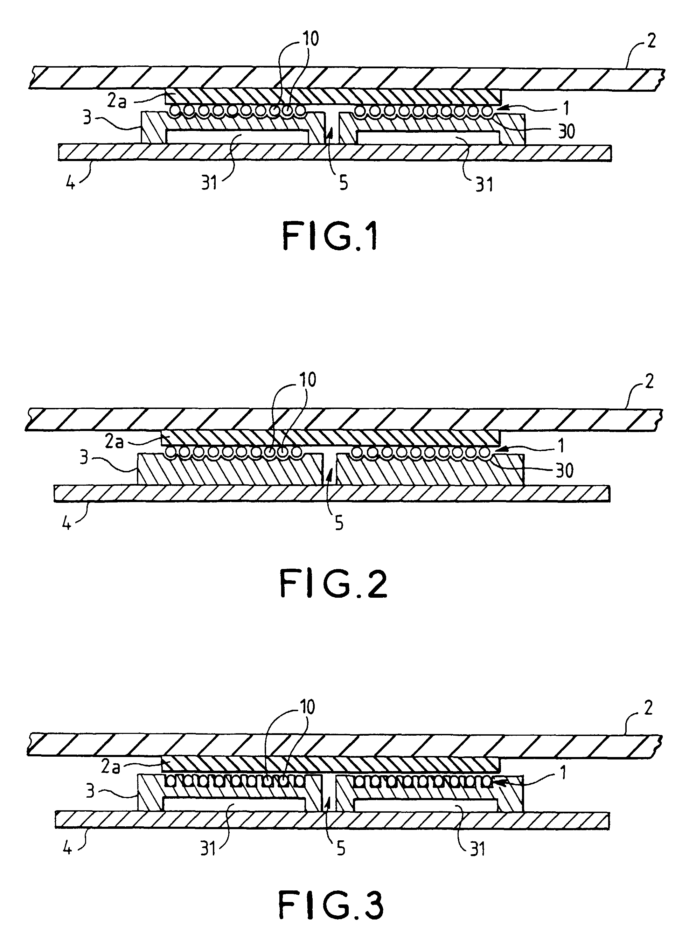

L'invention, ainsi que les nombreux avantages qu'elle procure, seront mieux compris au vu de la description suivante, faite en référence aux figures 1, 2 et 3 annexées, qui représentent schématiquement, en coupe selon un plan vertical, des variantes possibles d'un foyer de cuisson à induction conforme à l'invention.

Par souci de clarté, les éléments communs aux figures portent les mêmes références.

Le foyer de cuisson à induction représenté sur les figures 1 et 2 comporte classiquement un inducteur formé par un toron 1 de fils conducteurs électriques enroulé en forme de spirale. Les coupes effectuées sur les figures font apparaître les différentes spires 10 de l'inducteur. L'inducteur est placé sous une plaque 2, par exemple en vitrocéramique, destinée à recevoir les récipients à chauffer. L'inducteur est de préférence séparé de la plaque par une couche 2a d'isolant thermique (papier céramique ou laine de verre) de façon à protéger l'inducteur des échauffements des récipients. Le foyer comporte également, de façon connue, un support 3 d'inducteur comportant un matériau magnétique dont le rôle est de focaliser le champ magnétique créé par l'inducteur vers le récipient à chauffer, et un plateau 4 en matériau amagnétique, par exemple en aluminium, dont le rôle est de minimiser les champs parasites de l'inducteur, en vue notamment de protéger les dispositifs électroniques (non représentés) servant à commander le foyer. Comme l'indiquent clairement les figures 1 et 2, le plateau de blindage 4 est en contact avec la face inférieure du support 3. Le support 3 comporte en son centre une ouverture 5 correspondant au centre de l'inducteur, et permettant notamment le passage d'un capteur de température (non représenté) pour le contrôle de la cuisson.

Selon une première caractéristique de l'invention, le support 3 est réalisé en un matériau conducteur thermique et isolant électrique de manière à permettre un transfert calorifique depuis l'inducteur 1 jusqu'au plateau 4. Ce dernier peut ainsi évacuer l'excédent de chaleur nuisible à l'inducteur. La conductivité thermique du matériau choisi est typiquement comprise entre 0,8 et 2 W.m⁻¹.K⁻¹, les matériaux habituellement employés possédant une conductivité thermique de l'ordre de 0,3 W.m⁻¹.K⁻¹.

Selon une seconde caractéristique de l'invention, le transfert de chaleur est optimisé en plaçant chaque spire 10 de l'inducteur dans un logement 30 en forme de spirale prévu sur la face supérieure du support. Chaque spire 10 est ainsi en contact avec le support sur une portion circulaire et non plus en un seul point comme cela se produit lorsque l'inducteur est simplement posé sur la face supérieure plane d'un support. Le logement 30 peut être réalisé par impression d'une spirale sur la face supérieure du support. Une autre possibilité consiste à mouler directement le support avec son logement, ou encore à surmouler l'inducteur dans son support.

Dans tous les cas, le fait de placer chaque spire du toron de l'inducteur dans un logement épousant la forme des spires présente de nombreux avantages :

Le premier avantage, qui découle directement de l'amélioration du transfert calorifique, est qu'il est désormais possible de réduire de façon importante la section du toron, pour un niveau de pertes hautes fréquences comparable à celui d'un toron classique.

Par ailleurs, la taille du logement accueillant les différentes spires permet de calibrer de façon très précise le diamètre de l'inducteur.

Le logement peut permettre l'isolation électrique entre deux spires consécutives.

Il est également possible de donner à l'inducteur toutes les formes que l'on souhaite (spires jointives ou non, inducteur en forme de spirale circulaire, elliptique ou autre). Il suffit de prévoir, pour le support, un logement de forme adaptée.

Par ailleurs, un même support peut comporter plusieurs logements, chaque logement étant adapté à une forme particulière d'inducteur. De cette manière, le choix de l'inducteur qui viendra effectivement prendre place dans l'un des logements peut se faire au moment de l'assemblage.

En outre, il est possible de fabriquer un support d'inducteur de taille standard, et de réaliser, au moment de l'assemblage, un support de taille plus importante en ajoutant, autour du support standard, un support complémentaire en forme de couronne, comportant également un logement dans le prolongement de celui du support standard.

Tous les avantages précédents contribuent à réduire de manière significative le coût de fabrication d'un foyer à induction.

Pour ce qui est du matériau utilisé pour le support, différentes solutions peuvent être envisagées, selon les fonctions exactes attribuées au support d'inducteur.

Dans le cas de la figure 1, le support d'inducteur 3 comporte classiquement des fentes, par exemple radiales, à l'intérieur desquelles sont disposés des barreaux 31 en matériau magnétique, par exemple en ferrite. Pour assurer sa fonction de transfert thermique selon l'invention, le support peut être notamment en plastique chargé de particules thermiquement conductrices, ou en ciment réfractaire à base de poudre de magnésie.

Dans le cas de la figure 2, le matériau choisi pour le support permet à ce dernier de servir simultanément de circuit magnétique refocalisant les lignes de champ magnétique sur le dessus de l'inducteur et de moyen d'évacuation de la chaleur vers le plateau de blindage 4. A cet effet, on peut par exemple réaliser le support avec de la poudre de ferrites et/ou de fer, liée par exemple par un plastique.

Par ailleurs, le plateau 4 qui sert, de façon classique, de blindage aux rayonnements parasites de l'inducteur et, selon l'invention, de moyen de dissipation de l'énergie calorifique, peut être avantageusement dimensionné pour servir également de support à l'ensemble constitué par l'inducteur et le support d'inducteur.

On notera que les figures annexées n'ont pas pour but de montrer les dimensions ni les formes variées que peuvent avoir les différents éléments du foyer de cuisson selon l'invention.

A titre d'exemple illustratif mais non limitatif, on peut prévoir, pour un inducteur circulaire de diamètre total égal à 180 mm, un support d'inducteur également circulaire, de diamètre total égal à 184 mm sur une épaisseur de 8,7 mm. La section du toron pouvant être réduite jusqu'à 2,5 mm², le logement peut avoir une largeur légèrement supérieure pour accueillir ce toron, et une profondeur d'environ 3 mm.

Par ailleurs, le plateau 4 peut également être circulaire, et présente préférentiellement une épaisseur sensiblement égale à 1,2 mm.

La liaison entre le plateau 4 et le support 3 doit permettre un bon transfert thermique. Ceci peut être réalisé par collage du support sur le plateau, par surmoulage ou encore par simple pression. La forme de l'empreinte peut être, comme le montre la figure 3, telle que si le toron est rentré en force dans l'empreinte il n'en ressorte plus. Dans ce cas, la largeur de l'empreinte doit être inférieure au diamètre du toron qui est compressé avant d'être poussé dans l'empreinte. Ceci peut permettre l'utilisation d'un fil de base standard sachant que la plupart des autres principes nécessitent l'utilisation d'un fil thermoadhérent. Dans le cas du surmoulage, le plateau 4 comporte avantageusement des trous. Lors de l'opération de surmoulage, une partie du matériau utilisé pour le support passe à travers ces trous et vient s'étaler autour de ce trou, formant ainsi une sorte de bouchon maintenant le support et le plateau.

Les trous sont de préférence disposés sur la surface du plateau 4 de façon à homogénéiser la répartition des courants induits dans le plateau 4, et ainsi de parfaire le transfert de chaleur de l'ensemble. Bien entendu, le diamètre et le nombre des trous doivent être établis de façon à ne pas pénaliser le rôle d'écran électromagnétique du plateau.

## Revendications

1. Foyer de cuisson à induction du type comprenant au moins un inducteur (1), un support (3) d'inducteur comportant un matériau magnétique, et un plateau (4) de blindage disposé sous le support, en contact avec la face inférieure du support, le foyer étant caractérisé en ce que le support est réalisé en un matériau conducteur thermique et isolant électrique, et en ce que, l'inducteur comportant un toron (10) de fils conducteurs électriques divisé enroulé en forme de spirale, le support comporte, sur sa face supérieure, au moins un logement (30) en forme de spirale adapté pour recevoir ledit toron, de manière à optimiser le transfert de chaleur entre l'inducteur et le plateau de blindage.

2. Foyer de cuisson à induction selon la revendication 1, caractérisé en ce que ledit logement est réalisé par moulage du support.

3. Foyer de cuisson à induction selon la revendication 1, caractérisé en ce que ledit logement est réalisé par impression sur la face supérieure dudit support.

4. Foyer de cuisson à induction selon la revendication 1, caractérisé en ce que ledit logement est réalisé en surmoulant l'inducteur dans le support.

5. Foyer de cuisson à induction selon l'une quelconque des revendications précédentes, caractérisé en ce que le matériau magnétique se présente sous la forme de barreaux (31) de ferrites maintenus radialement dans le support (3).

6. Foyer de cuisson à induction selon la revendication 5, caractérisé en ce que le support (3) d'inducteur est en plastique chargé de particules thermiquement conductrices.

7. Foyer de cuisson à induction selon la revendication 5, caractérisé en ce que le support (3) d'inducteur est en ciment réfractaire à base de poudre de magnésie.

8. Foyer de cuisson à induction selon l'une quelconque des revendications 1 à 4, caractérisé en ce que le support (3) d'inducteur est en poudre de ferrite liée par un plastique.

9. Foyer de cuisson à induction selon l'une quelconque des revendications précédentes, caractérisé en ce que le plateau (4) de blindage est utilisé pour supporter l'inducteur (1) et le support (3) d'inducteur.

10. Foyer de cuisson à induction selon l'une quelconque des revendications précédentes, caractérisé en ce que le plateau (4) comporte une pluralité de trous répartis de façon à homogénéiser la répartition de courants induits dans ledit plateau.

11. Foyer de cuisson à induction selon la revendication 10, caractérisé en ce que le support (3) est surmoulé sur le plateau, une partie du matériau du support (3) formant un bouchon au travers des trous pour maintenir assemblés le plateau et le support.

12. Foyer de cuisson à induction selon la revendication 1, caractérisé en ce que le logement en forme de spirale a une largeur inférieure au diamètre du toron qui doit être rentré en force.

## Patentansprüche

1. Induktions-Kochmulde vom Typ mit mindestens einem Induktor (1), einem Induktorträger (3), der ein magnetisches Material enthält, und einer unter dem Träger angeordneten Abschirmungsplatte (4), die mit der Unterseite des Trägers in Kontakt steht, dadurch gekennzeichnet, daß der Träger aus einem thermisch leitfähigen und elektrisch isolierenden Material besteht, und daß, da der Induktor eine geteilte, spiralförmig aufgerollte Litze (10) aus elektrisch leitfähigen Drähten enthält, der Träger auf seiner Oberseite mindestens eine spiralförmige Aufnahme (30) enthält, die so angepaßt ist, daß sie die Litze aufnehmen kann, um die Übertragung der Wärme zwischen dem Induktor und der Abschirmungsplatte zu optimieren.

2. Induktions-Kochmulde nach Anspruch 1, dadurch gekennzeichnet, daß die Aufnahme durch Formen des Trägers gebildet ist.

3. Induktions-Kochmulde nach Anspruch 1, dadurch gekennzeichnet, daß die Aufnahme durch Eindrücken der Oberseite des Trägers gebildet ist.

4. Induktions-Kochmulde nach Anspruch 1, dadurch gekennzeichnet, daß die Aufnahme durch Eingießen des Induktors im Träger gebildet ist.

5. Induktions-Kochmulde nach einem der vorangehenden Ansprüchen, dadurch gekennzeichnet, daß das magnetische Material durch radial im Träger (3) gehaltene Ferritstäbe (31) gebildet ist.

6. Induktions-Kochmulde nach Anspruch 5, dadurch gekennzeichnet, daß der Induktorträger (3) aus einem mit thermisch leitfähigen Partikeln versehenen Kunststoff besteht.

7. Induktions-Kochmulde nach Anspruch 5, dadurch gekennzeichnet, daß der Induktorträger (3) aus Schamottemörtel auf der Basis von Magnesiumoxyd-Pulver besteht.

8. Induktions-Kochmulde nach einem der vorangehenden Ansprüchen, dadurch gekennzeichnet, daß der Induktorträger (3) aus einem mit einem Kunststoff gebundenen Ferritpulver besteht.

9. Induktions-Kochmulde nach einem der vorangehenden Ansprüchen, dadurch gekennzeichnet, daß die Abschirmplatte (4) zum Stützen des Induktors (1) und des Induktorträgers (3) verwendet wird.

10. Induktions-Kochmulde nach einem der vorangehenden Ansprüchen, dadurch gekennzeichnet, daß die Platte (4) eine Mehrzahl von Löchern aufweist, die so verteilt sind, daß die Verteilung der in der Platte induzierten Ströme homogenisiert wird.

11. Induktions-Kochmulde nach Anspruch 10, dadurch gekennzeichnet, daß der Träger (3) auf die Platte aufgegossen ist, wobei ein Teil des Materials des Trägers (3) einen Stopfen durch Löcher hindurch bildet, um die Platte und den Träger zusammengefügt zu halten.

12. Induktions-Kochmulde nach Anspruch 1, dadurch gekennzeichnet, daß die spiralförmige Aufnahme eine Breite aufweist, die kleiner ist als der Durchmesser der Litze, die mit Kraft eingepreßt werden muß.

## Claims

1. Induction-type cooking range of the sort having at least one inductor (1), an inductor support (3) comprising a magnetic material, and a screening plate (4) disposed beneath the support and in contact with the lower face of the support, said range being characterised in that the support is produced from a heat-conducting and electrically insulating material, and in that, the inductor comprising a strand (10) of electrically conducting wires which is divided wound into a spiral shape, the support comprises, on its upper face, at least one spiral-shaped seat (30) adapted to receive said strand, so as to optimise the transfer of heat between the inductor and the screening plate.

2. Induction-type cooking range according to claim 1, characterised in that said seat is produced by moulding the support.

3. Induction-type cooking range according to claim 1, characterised in that said seat is produced by making an impression in the upper face of said support.

4. Induction-type cooking range according to claim 1, characterised in that said seat is produced by over-moulding the inductor in the support.

5. Induction-type cooking range according to according to any one of the preceding claims, characterised in that the magnetic material is in the form of ferrite bars (31) held radially in the support (3).

6. Induction-type cooking range according to claim 5, characterised in that the inductor support (3) is made of a plastic in which heat-conducting particles are embedded.

7. Induction-type cooking range according to claim 5, characterised in that the inductor support (3) is made of magnesium oxide powder based refractory cement.

8. Induction-type cooking range according to any one of claims 1 to 4, characterised in that the inductor support (3) is made of ferrite powder with a plastic to bind it.

9. Induction-type cooking range according to any one of the preceding claims, characterised in that the screening plate (4) is used to support the inductor (1) and the inductor support (3).

10. Induction-type cooking range according to any one of the preceding claims, characterised in that the plate (4) has a plurality of holes distributed so as to even out the distribution of currents induced in said plate.

11. Induction-type cooking range according to claim 10, characterised in that the support (3) is over-moulded onto the plate, with part of the material of the support (3) forming a plug through the holes in order to keep the plate and the support assembled together.

12. Induction-type cooking range according to claim 1, characterised in that the spiral-shaped seat has a width less than the diameter of the strand, which has to be introduced by force into the latter.
